Europäisches Patentamt

European Patent Office

Office européen des brevets

(19)

(11) Publication number: **0 002 126**
**B1**

(12) **EUROPEAN PATENT SPECIFICATION**

(45) Date of publication of patent specification: **15.07.81**

(21) Application number: **78300623.2**

(22) Date of filing: **13.11.78**

(51) Int. Cl.³: **F 16 F 9/10, G 21 D 1/02,
G 01 M 3/28**

(54) Hydraulic brake for dampening motion between structures.

(30) Priority: **12.11.77 DE 2750737**

(43) Date of publication of application:
**30.05.79 Bulletin 79/11**

(45) Publication of the grant of the European patent:
**15.07.81 Bulletin 81/28**

(84) Designated Contracting States:
**BE FR GB LU NL SE**

(56) References cited:
**FR - A - 2 180 214
US - A - 2 198 411
US - A - 3 739 808
US - A - 3 795 139**

(73) Proprietor: **BROWN BOVERI REAKTOR GmbH
Heppenheimerstrasse 27-29
D-6800 Mannheim 31 (DE)**

(72) Inventor: **Zintel, Jakob
Johan-Walter-Strasse 19
D-6840 Hüttenfeld (DE)**
Inventor: **Zipser, Rudolf
Weidigweg 29
D-6100 Darmstadt (DE)**

(74) Representative: **Cotter, Ivan John et al,
D. YOUNG & CO. 10 Staple Inn
London WC1V 7RD (GB)**

Courier Press, Leamington Spa, England.

# 0 002 126

## Hydraulic brake for dampening motion between structures

This invention relates to a hydraulic brake for dampening motion between structures, the brake being particularly (but not exclusively) suitable for use in nuclear power plants.

Hydraulic brakes or snubbers are known and are used in industry for braking undesired component movements. For example, nuclear power plants comprise steam generators which undergo movements due to large temperature differences, and such generators may be mounted by means of hydraulic brakes which permit such movements of the generators. However, if undesired movement forces occur, e.g. due to earthquakes, the hydraulic brakes will block this movement and represent a rigid support, so that damage due to such undesired movement forces can be prevented. In nuclear power plants in particular, the hydraulic brakes must be subjected to routine tests (in-service inspections) due to the strict safety requirements, in order to ensure their functional capability.

US Patent No. 3 795 139 (Peck) discloses a hydraulic brake for dampening motion between a first structure and a second structure, the brake comprising:

a casing having a first end and a second end, the first end being fixable to the first structure;

a piston slidably disposed within the casing to divide the casing into a first chamber and a second chamber;

a piston rod extending from the piston through the second chamber and further extending slidably out through the second end of the casing, the end of the piston rod outside of the casing being fixable to the second structure;

piston sealing means for precluding fluid communication between the first chamber and the second chamber around the piston;

a hydraulic fluid reservoir, the reservoir, the first chamber and the second chamber being filled with hydraulic fluid at a common pressure;

conduit means for providing fluid communication between the first chamber, the second chamber, and the reservoir;

isolation valve means for selectively isolating the first chamber and the second chamber from the reservoir and from each other;

throttling valve means for throttling the rate of fluid flow through the conduit means;

pressure means for selectively supplying pressure to the first chamber and the second chamber; and

pressure detection means for selectively detecting and indicating pressure of the first chamber and the second chamber.

As mentioned above, safety precautions require continuous inspection of conventional hydraulic brakes during reactor operation. A continuous inspection of this type is very costly. It is possible, in the arrangement disclosed in U.S. Patent No. 3 795 139, to effect a test for fluid leakage past the piston sealing means. However, there is no disclosure in the U.S. Patent of any technique for testing the throttle valve means, whereby an expensive continuous inspection of this would appear necessary.

Another disadvantage of the hydraulic brake disclosed in U.S. Patent No. 3 795 139 is that upon loss of the hydraulic fluid a shutdown of the reactor is necessary since functioning of the brake is no longer ensured. This condition would of necessity reduce the availability of the plant.

The problem underlying this invention is therefore to provide a hydraulic brake which precludes a loss of fluid during normal operation and during plant accidents, and which would make continuous inspection during its utilisation period unnecessary, but which would allow a periodic inspection of sealing means and throttling valve means thereof while the reactor is shut down.

This problem is solved in that a bellows is sealably attached to the end of the piston rod outside of the casing and sealably attached to the second end of the casing to form a third chamber containing the piston rod protruding from the casing:

casing sealing means is provided to preclude fluid communication between the second chamber and the third chamber around the piston rod;

the third chamber is filled with hydraulic fluid at the common pressure;

the conduit means provides fluid communication between the third chamber and the first chamber, the second chamber and the reservoir;

the isolation valve means provides isolation of the third chamber; and

the pressure detection means is capable of indicating the pressure of the third chamber.

Such an arrangement enables testing of the throttling valve means and the casing sealing means, as well as the piston sealing means, equalises the pressure across both such sealing means, and precludes a loss of fluid during normal operation and during accidents.

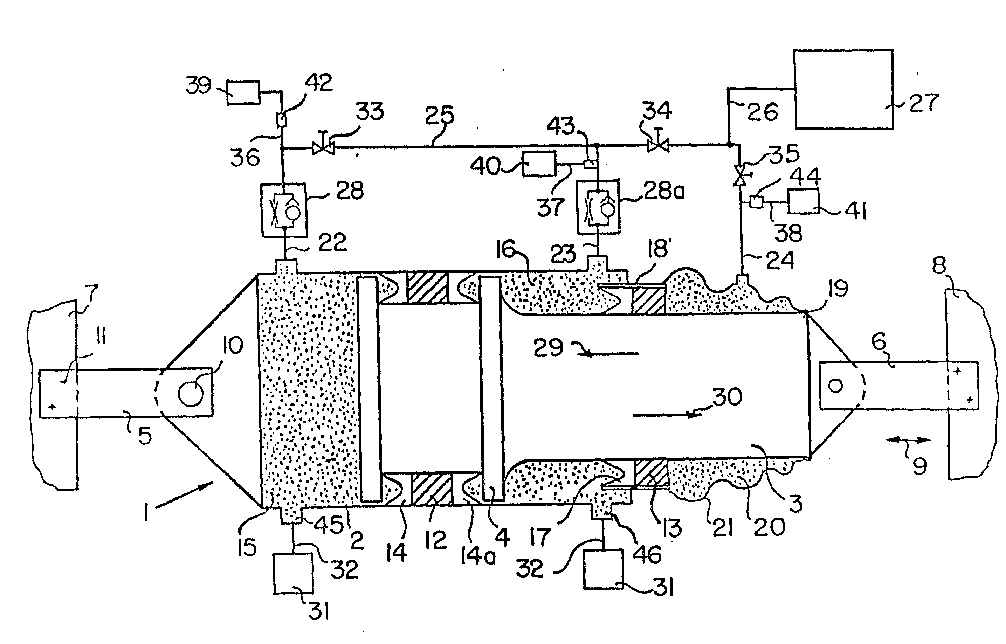

The invention will now be further described, by way of illustrative and non-limiting example, with reference to the accompanying drawings, the sole figure of which schematically illustrates a hydraulic vibration brake embodying the invention.

The illustrated hydraulic vibration brake 1 comprises a casing 2 in which a piston 4, which is connected to a piston rod 3, is mounted in such a way as to be slidably mobile. An end of the piston rod 3 extending out through one end of the casing 2, and the other end of the casing 2, are connected,

2

respectively, to components 7, 8 via straps 5, 6 and bolts 10 and 11, in order to damp their permissible movement in the direction of an arrow 9, and to block their impermissible movements. The piston 4 and the piston rod 3 extend through sliding bearings 12 and 13. Two piston seals 14 and 14a separate the interior of the casing into to chambers 15 and 16. At the point at which the piston rod 3 protrudes beyond the casing 2 through an end face of the casing, the chamber 16 is closed with the aid of a seal 17. The seal 17 and bearing 13 are mounted in a U-shaped mounting 18 of the casing 2. A bellows 21 is mounted at the end of casing 2 in the area of the mounting 18. The bellows is also attached to the free end 19 of the piston rod 3, so that it delimits a chamber 20. The chambers 15, 16, 20 are connected to a hydraulic liquid storage tank 27 and to one another via conduits or lines 22, 23, 24, 25, 26. Valves 28, 28a are installed in the lines 22, 23 so that, in response to heat-generated expansion of the components 7, 8, a throttled liquid flow can pass in a known manner to accommodate relative movement of the components 7, 8. If, for example, the piston 4 moves in the direction of an arrow 29, a throttle flow passes through the valve 28. Pressure equalisation takes place via a throttle of the valve 28a in the direction of the chamber 16. If the piston 4 moves in the direction of an arrow 30, pressure equalization takes place in the reverse sense to the chamber 15. Since the chambers 15, 16 and 20 are all connected to the storage tank 27, the pressure in each chamber is equal to the pressure in the storage tank. In this way, all possible leaks are also equalized at the seals 14, 17. Due to the equal pressure in the chambers, leaks between the chambers are precluded. A leak towards the outside can also not occur since no outer seals are present due to the present bellow design. If an undesired whipping movement of the piston occurs, which could be caused by an earthquake or a pipe break, one of the valves 28, 28A, depending upon the direction of movement of the piston, is closed due to the excessive pressure, so that there will be a sturdy support between the components 7, 8.

To inspect the seals and valves while the reactor is shut down, the chambers 15, 16 can each be supplied at connection nozzles 45, 46 thereof with pressure by means of a mobile pump unit 31, via a line 32. Hydraulic liquid from the vibration brake is used as a pressure medium. Isolation valves 33, 34, 35 are installed in the lines 24, 25. The lines 22, 23, 24 have branches 36, 37, 38 which lead to leak measuring equipment 39, 40, 41, and which can be isolated by means of valves 42, 43, 44.

The tests which are possible using the studied leak measuring equipment are listed in the following table.

| Component to be inspected | Test Pressure in Chamber | Isolation Valve | | | Leak Measuring Device | | |
|---|---|---|---|---|---|---|---|
| | | 33 | 34 | 35 | 39 | 40 | 41 |
| Valve 28 | 15 | closed | closed | closed | open | closed | closed |
| Valve 28a | 16 | closed | closed | open | closed | open | closed |
| Piston rod Seal 17 | 16 | closed | closed | closed | closed | closed | open |
| Piston Seal 14 | 15 | closed | closed | closed | closed | open | closed |
| Piston seal 14a | 16 | closed | closed | open | open | closed | closed |

The advantage of the equipment disclosed above is that, at least during normal operation and during all accidents to the vibration brakes, no hydraulic liquid is lost at the seals, so that the vibration brake always has sufficient hydraulic liquid for its utilisation as a sturdy support.

This makes an inspection during reactor operation superfluous. Remote-controlled planned inspection of the seals with the aid of the described leak measuring tests during the shutdown periods of the reactor system is sufficient.

**Claims**

1. A hydraulic brake for dampening motion between a first structure (7) and a second structure (8), the brake comprising:

0 002 126

a casing (2) having a first end and a second end, the first end being fixable to the first structure (7);

a piston (4) slidably disposed within the casing (2) to divide the casing into a first chamber (15) and a second chamber (16);

a piston rod (3) extending from the piston (4) through the second chamber (16) and further extending slidably out through the second end of the casing (2), the end (19) of the piston rod (3) outside of the casing (2) being fixable to the second structure (8);

piston sealing means (14, 14a) for precluding fluid communication between the first chamber (15) and the second chamber (16) around the piston (4);

a hydraulic fluid reservoir (27), the reservoir, the first chamber (15) and the second chamber (16) being filled with hydraulic fluid at a common pressure;

conduit means (22, 23, 25, 26) for providing fluid communication between the first chamber (15), the second chamber (16), and the reservoir (27);

isolation valve means (33, 34) for selectively isolating the first chamber (15) and the second chamber (16) from the reservoir (27) and from each other;

throttling valve means (28, 28a) for throttling the rate of fluid through the conduit means (22, 23, 25, 26);

pressure means for selectively supplying pressure to the first chamber (15) and the second chamber (16); and

pressure detection means (39, 40) for selectively detecting and indicating pressure of the first chamber (15) and the second chamber (16);

characterised in that:

a bellows (21) is sealably attached to the end (19) of the piston rod (3) outside of the casting (2) and sealably attached to the second end of the casing to form a third chamber (2) containing the piston rod (3) protruding from the casing (20);

casing sealing means (17) is provided to preclude fluid communication between the second chamber (16) and the third chamber (20) around the piston rod (3);

the third chamber (20) is filled with hydraulic fluid at the common pressure;

the conduit means (22, 23, 24, 25, 26) provides fluid communication between the third chamber (20) and the first chamber (15), the second chamber (16) and the reservoir (27);

The isolation valve means (33, 34, 35) provides isolation of the third chamber (20); and

the pressure detection means (39, 40, 41) is capable of indicating the pressure of the third chamber (20).

2. A hydraulic brake according to claim 1, wherein the pressure means includes:

a first chamber pressure nozzle (45) penetrating the wall of the casing (2) at the first chamber (15);

a second chamber pressure nozzle (46) penetrating the wall of the casing (2) at the second chamber (16), and

pump means (31) connectible with the said first and second chamber pressure nozzles (45, 46) via a pressure pipe (32).

3. A hydraulic brake according to claim 1 or claim 2, wherein the conduit means includes:

a common conduit (25);

a first chamber conduit (22) providing fluid communication between the first chamber (15) and the common conduit (25);

a second chamber conduit (23) providing fluid communication between the second chamber (16) and the common conduit (25);

a third chamber conduit (24) providing fluid communication between the third chamber (20) and the common conduit (25);

the second chamber conduit (23) communicating with the common conduit (25) at a point between the points of communication of the first chamber conduit (22) and the third chamber conduit (24) with the common conduit (25); and

a reservoir conduit (26) providing fluid communication between the reservoir (27) and the common conduit (25) at a point between the points of communication of the second chamber conduit (23) and the third chamber conduit (24) with the common conduit (25);

the isolation valve means including

a first chamber isolation valve (33) positioned on the common conduit (25) between the first chamber conduit (22) and the second chamber conduit (23),

a second chamber isolation valve (34) positioned on the common conduit (25) between the second chamber conduit (23) and the reservoir conduit (26), and

a third chamber isolation valve (35) positioned on the third chamber conduit (24);

the throttling means including

a first throttle valve (28) positioned on the first chamber conduit (22), and

a second throttling valve (28a) positioned on the second chamber conduit (23); and

the pressure detection means including

4

a first isolatable detector (39) in fluid communication with the first chamber conduit between the first chamber isolation valve (33) and the first throttling valve (28),

a second isolatable detector (40) in fluid communication with the second chamber conduit (23) between the common conduit (25) and the second throttling valve (28a), and

a third isolatable detector (41) in fluid communication with the third chamber conduit (24) between the third isolation valve (35) and the third chamber (20).

4. A hydraulic brake according to claim 3, wherein:

the first chamber isolation valve (33), the second chamber isolation valve (34) and the third chamber isolation valve (35) are closed; and

the first chamber (15) is pressurised by the pressure means to enable testing of the first throttling valve (28) with the first detector (39).

5. A hydraulic brake according to claim 3, wherein:

the first chamber isolation valve (33) and the second chamber isolation valve (34) are closed;

the third chamber isolation valve (35) is opened ; and

the second chamber (16) is pressurised by the pressure means to enable testing of the second throttling valve (28a) with the second detector (40).

6. A hydraulic brake according to claim 3, wherein:

the first chamber isolation valve (33) and the second chamber isolation valve (34) and the third chamber isolation valve (35) are closed; and

the second chamber (16) is pressurised by the pressure means to enable testing of the casing sealing means (17) with the third detector (41).

7. A hydraulic brake according to claim 3, wherein:

the piston sealing means includes a first seal (14) to seal the piston (4) with respect to the first chamber (15) and a second seal (14a) to seal the piston with respect to the second chamber (16).

8. A hydraulic brake according to claim 7, wherein:

the first chamber isolation valve (33), the second chamber isolation valve (34) and the third chamber isolation valve (35) are closed; and

the first chamber (15) is pressurized by the pressure means to enable testing of the first piston seal (14) with the second detector (40).

9. A hydraulic brake according to claim 7, wherein:

the first chamber isolation valve (33) and the second chamber isolation valve (34) are closed;

the third chamber isolation valve (35) is opened; and

the second chamber (16) is pressurised by the pressure means to enable testing of the second piston seal (14a) with the first detector (39).

**Revendications**

1. Frein hydraulique permettant d'amortir un déplacement entre une première structure (7) et une seconde structure (8), ce frein comportant un boîtier (2) comportant une première extrémité et une seconde extrémité et dans lequel la première extrémité peut être fixée à la première structure (7), un piston (4) disposé de façon à pouvoir glisser dans le boîtier (2) en vue de subdiviser ce dernier en une première chambre (15) et une seconde chambre (16), une tige de piston (3) s'étendant à partir du piston (4) à travers la seconde chambre (16) et sortant en outre, avec possibilité de glissement, par la seconde extrémité du boîtier (2), l'extrémité (19) de la tige de piston (3) située à l'extérieur du boîtier (2) pouvant être fixée à la seconde structure (8), des dispositifs (14, 14a) d'étanchéité du piston permettant d'empêcher une communication du fluide autour du piston (4) entre la première chambre (15) et la seconde chambre (16), un réservoir de fluide hydraulique (27), qui est, avec la première chambre (15) et la second chambre (16), rempli par le fluide hydraulique à une pression commune, un système de canalisations (22, 23, 25, 26) destiné à assurer une communication du fluide entre la première chambre (15), la seconde chambre (16) et le réservoir (27), des vannes d'isolement (33, 34) permettant d'isoler de façon sélective la première chambre (15) et la seconde chambre (16) par rapport au réservoir (27) et une chambre par rapport à lautre, des vannes d'étranglement (28, 28a) permettant d'etrangler le débit de fluide dans le système de canalisations (22, 23, 25, 26), un dispositif d'alimentation en pression permettant d'envoyer de façon sélective une pression à la première chambre (15) et à la seconde chambre (16), et des dispositifs de détection de pression (39, 40) permettant de détecter de façon sélective et d'indiquer la pression de la première chambre (15) et de la seconde chambre (16), caractérisé par le fait qu'un soufflet (21) est fixé, avec possibilité d'étanchéification à l'extrémité (19) de la tige de piston (3) à l'extérieur du boîtier (2) et est fixé, avec possibilité d'étanchéification, à la seconde extrémité du boîtier de manière à former une troisième chambre (20) contentant la tige de piston (3) faisant saillie hors du boîtier (2), qu'il est prévu un dispositif (17) d'étanchéité du boîtier permettant d'empêcher une communication du fluide entre la seconde chambre (16) et la troisième chambre (20), autour de la tige de piston (3), que la troisième chambre (20) est remplie par le fluide hydraulique à une pression commune, que le système de canalisations (22, 23, 24, 25, 26) établie une communication du fluide entre la troisième chambre (20) et la première chambre (15) et entre la seconde chambre (16) et le réservoir (27), que les vannes d'isolement (33, 34,

# 0 002 126

35) permettent l'isolement de la troisième chambre (20) et que les dispositifs de détection de pression (39, 40, 41) sont aptes a indiquer la pression de la troisième chambre (20).

2. Frein hydraulique selon la revendication 1, caractérisé par le fait que le dispositif d'alimentation en pression comporte une buse (45) d'alimentation en pression de la première chambre, traversant la paroi du boîtier (2) au niveau de la première chambre (15), une second buse (46) d'alimentation en pression de la seconde chambre, traversant la paroi du boîtier (2) au niveau de la seconde chambre (16), et des moyens de pompage pouvant être raccordée avec la première et la seconde buse (45, 46) d'alimentation en pression par l'intermédiaire d'une canalisation d'alimentation en pression (32).

3. Frein hydraulique selon l'une des revendications 1 ou 2, caractérisé par le fait que le systèm de canalisations comporte une canalisation commune (25), une canalisation (22) reliée à la seconde chambre et permettant une communication du fluide entre la première chambre (15) et la canalisation commune (25), une canalisation (23) de la seconde chambre permettant une communication du fluide entre la seconde chambre (16) et la canalisation commune (25), une canalisation (24) de la troisième chambre permettant une communication du fluide entre la troisième chambre (20) et la canalisation commune (25), la canalisation (23) de la seconde chambre communiquant avec la canalisation commune (25) en un point situé entre les points de communication de la canalisation (22) de la première chambre et la canalisation (24) de latroisième chambre avec la canalisation commune (25), et une canalisation (26) du réservoir permettant une communication du fluide entre le réservoir (27) et la canalisation commune (25) en un point situé entre les points de communication de la canalisation (23) de la seconde chambre et la canalisation (24) de la troisième chambre acec la canalisation commune (25), et que le système à vannes d'isolement comporte une vanne d'isolement (33) de la première chambre disposée dans la canalisation commune (25) entre la canalisation (22) et la canalisation (23), une vanne d'isolement (34) de la seconde chambre disposée dans la canalisation commune (25) entre la canalisation (23) et la canalisation (26) du réservoir, et une vanne d'isolement (35) de la troisième chambre disposée dans la canalisation (24) de la troisième chambre, et que le système à vannes d'étranglement comporte une première vanne d'étranglement (28) montée dans la canalisation (22) de la première chambre et une seconde vanne d'étranglement (28a) montée dans la canalisation (23) de la seconde chambre, et que les dispositifs de détection de pression comportent un premier détecteur (39) pouvant être mis en communication hydraulique avec la canalisation de la première chambre entre la vanne d'isolement (33) de la première chambre et la première vanne d'étranglement (28), un second détecteur (40) pouvant être mis en communication hydraulique avec la canalisation (23) de la seconde chambre entre la canalisation commune (25) et la seconde vanne d'étranglement (28a), et un troisième détecteur (41) pouvant être placé en communication hydraulique avec la canalisation (24) de la troisième chambre entre la troisième vanne d'isolement (35) et la troisième chambre (20).

4. Frein hydraulique selon la revendication 3, caractérisé par le fait que la vanne d'isolement (33) de la première chambre, la vanne d'isolement (34) de la seconde chambre et la vanne d'isolement (35) de la troisième chambre sont fermées et que la première chambre (15) est mise souse pression par le dispositif d'alimentation en pression pour pouvoir tester la première vanne d'étranglement (28) avec le premier détecteur (39).

5. Frein hydraulique selon la revendication 3, caractérisé par le fait que la vanne d'isolement (33) de la première chambre et la vanne d'isolement (34) de la seconde chambre sont fermées, que la vanne d'isolement (35) de la troisième chambre est ouverte et que la seconde chambre (16) est mise sous pression à l'aide du dispositif d'alimentation en pression afin de pouvoir tester la seconde vanne d'étranglement (28a) á l'aide du second détecteur (40).

6. Frein hydraulique selon la revendication 3, caractérisé par le fait que la vanne d'isolement (33) de la première chambre, la vanne d'isolement (34) de la seconde chambre et la vanne d'isolement (35) de la troisième chambre sont fermées et que la seconde chambre (16) est mise sous pression au moyen du dispositif d'alimentation en pression afin de pouvoir tester le dispositif (17) d'étanchéité du boîtier avec le troisième détecteur (41).

7. Frein hydraulique selon la revendication 3, caractérisé par le fait que le dispositif d'étanchéité du piston comport un premier joint (14) permettant de rendre étanche le piston (4) par rapport à la première chambre (15) et un second joint d'étanchéité (14a) permettant de rendre étanche le piston par rapport à la seconde chambre (16).

8. Frein hydraulique selon la revendication 7, caractérisé par le fait que la vanne d'isolement (33) de la première chambre, la vanne d'isolement (34) de la seconde chambre et la vanne d'isolement (35) de la troisième chambre sont fermées et que la première chambre (15) est mise sous pression au moyen du dispositif d'alimentation en pression pour tester le premier joint d'étanchéité (14) du piston à l'aide du second détecteur (40).

9. Frein hydraulique selon la revendication 7, caractérisé par le fait que la vanne d'isolement (33) de la première chambre et la vanne d'isolement (34) de la seconde chambre sont fermées, que la vanne d'isolement (35) de la troisième chambre est ouverte et que la seconde chambre (16) est mise sous pression au moyen du dispositif d'alimentation en pression pour tester le second joint d'étanchéité (14a) du piston et du premier détecteur (39).

# 0 002 126

**Patentansprüche**

1. Hydraulische Bremse für die Dämpfung der Bewegung zwischen einem ersten Gebilde (7) und einem zweiten Gebilde (8), wobei die Bremise beinhaltet: ein Gehäuse (2) mit einem ersten und einem zweiten Ende, wobei das erste Ende an dem ersten Gebilde (7) befestigbar ist; einem gleitend in dem Gehäuse (2) angeordneten Kolben (4), mit dem das Gehäuse in eine erste Kammer (15) und eine zweite Kammer (16) geteilt ist; eine sich von dem Kolben (4) durch die zweite Kammer (16) und weiter gleitend nach außen durch das zweite Ende des Gehäuses (2) erstreckende Kolbenstange (3), deren Ende (19) außerhalb des Gehäuses (2) an dem zweiten Gebilde (8) befestigbar ist; um den Kolben (4) herum angeordnete Kolbendichtungsmittel (14, 14a) zur Abdichtung der ersten Kammer (15) und der zweiten Kammer (16) voneinander; einen hydraulischen Flüssigkeitsspeicher (27), der, ebenso wie die erste Kammer (15) und die zweite Kammer (16) mit überall unter gleichem Druck stehender hydraulischer Flüssigkeit gefüllt ist; Leitungen (22, 23, 25, 26) für die leitende Verbindung zwischen der ersten Kammer (15), der zweiten Kammer (16) und dem Speicher (27); Absperrventilmittel (33, 34) zum selektiven Absperren der ersten Kammer (15) und der zweiten Kammer (16) vom Speicher (27) und voneinander; Drosselventilmittel (28, 28a) zum Drosseln des Hydraulikflüssigkeitsdurchflusses durch die Leitungen (22, 23 25, 26); Druckmittel zum selektiven Aufbringen von Druck auf die erste Kammer (15) und die zweite Kammer (16); und Druckerfassungsmittel (39, 40) für das selektive Erfassen und Anzeigen des Druckes der ersten Kammer (15) und der zweiten Kammer (16), dadurch gekennzeichnet, daß ein Balg (21) in abgedichteter Weise an dem Ende (19) der Kolbenstange (3) außerhalb des Gehäuses (2) befestigt ist und er ferner abgedichtet an dem zweiten Ende des Gehäuses befestigt ist, wodurch eine dritte Kammer (20) gebildet ist, die die aus dem Gehäuse (2) vorstehende Kolbenstange (3) in sich aufnimmt; daß dem Gehäuse zugeordnete Abdichtmittel (17) um die Kolbenstange (3) herum angeordnet sind, die die zweite Kammer (16) gegenüber der dritten Kammer (20) abdichten; die dritte Kammer (20) mit unter dem gemeinsamen, überall gleichen Druck stehender Hydraulikflüssigkeit gefüllt ist; die Leitungen (22, 23, 24, 25, 26) eine leitende Verbindung zwischen der dritten Kammer (20) und der ersten Kammer (15), der zweiten Kammer (16) und dem Speicher (27) bilden; die Absperrventilmittel (33, 34, 35) die dritte Kammer (20) absperrbar machen; und die Druckerfassungsmittel (39, 40, 41) auch auf das Aufzeigen des Druckes in der dritten Kammer (20) ausgelegt sind.

2. Hydraulische Bremse nach Anspruch 1, worin die Druckmittel beinhalten: ein der ersten Kammer zugeordnete Druckdüse (45), die die Wand des Gehäuses (2) im Bereich der ersten Kammer (15) durchdringt, sowie eine der zweiten Kammer zugeordnete Druckdüse (46), die die Wand des Gehäuses (2) im Bereich der zweiten Kammer (16) durchdringt, und Pumpenmittel (31), die mit den der ersten und zweiten Kammer zugeordneten Druckdüsen (45, 46) über eine Druckleitung (32) verbindbar sind.

3. Hydraulische Bremse nach Anspruch 1 oder 2, worin die Leitungen beinhalten: eine gemeinsame Leitung (25), eine der ersten Kammer zugeordnete Leitung (22), die die erste Kammer (15) mit der gemeinsamen Leitung (25) verbindet; eine der zweiten Kammer zugeordnete Leitung (23), die die zweite Kammer (16) mit der gemeinsamen Leitung (25) verbindet; eine der dritten Kammer zugeordnete Leitung (24), die die dritte Kammer (20) mit der gemeinsamen Leitung (25) verbindet; wobei die der zweiten Kammer zugeordnete Leitung (23) in leitender Verbindung mit der gemeinsamen Leitung (25) an einem Punkt steht, der zwischen den Anschlußpunkten der der ersten Kammer zugeordneten Leitung (22) und der der dritten Kammer zugeordneten Leitung (24) mit der gemeinsamen Leitung (25) liegt; und eine dem Speicher zugeordnete Leitung (26) vorgesehen ist, die den Speicher (27) mit der gemeinsamen Leitung (25) an einem Verbindungspunkt zwischen der Verbindungspunkten der der zweiten Kammer zugeordneten Leitung (23) und der der dritten Kammer zugeordneten Leitung (24) mit der gemeinsamen Leitung (25) verbindet; wobei die Absperrventilmittel beinhalten: ein der ersten Kammer zugeordnetes Absperrventil (33), das in der gemeinsamen Leitung (25) zwischen der der ersten Kammer zugeordneten Leitung (22) und der der zweiten Kammer zugeordneten Leitung (23) liegt, ein der zweiten Kammer zugeordnetes Absperrventil (34), das in der gemeinsamen Leitung (25) zwischen der der zweiten Kammer zugeordneten Leitung (23) und der dem Speicher zugeordneten Leitung (26) liegt, und einem der dritten Kammer zugeordneten Absperrventil (35), das in der Leitung (24) zur dritten Kammer liegt; wobei die Drosselventilmittel beinhalten: ein erstes Drosselventil (28) in der der ersten Kammer zugeordneten Leitung (22), ein zweites Drosselventil (28a) in der der zweiten Kammer zugeordneten Leitung (23); und wobei die Druckerfassungsmittel beinhalten: einen ersten abtrennbaren Detektor (39), der mit der der ersten Kammer zugeordneten Leitung zwischen dem der ersten Kammer zugeordneten Absperrventil (33) und dem ersten Drosselventil (28) steht, einen zweiten abtrennbaren Detektor (40), der in leitender Verbindung mit der der zweiten Kammer zugeordneten Leitung (23) zwischen der gemeinsamen Leitung (25) und dem zweiten Drosselventil (28a) steht, und einen dritten abtrennbaren Detektor (41), der mit der der dritten Kammer zugeordneten Leitung (24) zwischen dem dritten Absperrventil (34) und der dritten Kammer (20) steht.

4. Hydraulische Bremse nach Anspruch 3, worin das der ersten Kammer zugeordnete Absperrventil (33) das der zweiten Kammer zugeordnete Absperrventil (34) und das der dritten Kammer zugeordnete Absperrventil (35) geschlossen sind und die erste Kammer (15) durch die Druckmittel

7

unter Druck gesetzt ist, derart, daß das ersten Drosselventil (28) mit dem ersten Detektor (39) überprüfbar ist.

5. Hydraulische Bremse nach Anspruch 3, worin das der ersten Kammer zugeordnete Absperrventil (33) und das der zweiten Kammer zugeordnete Absperrventil (34) geschlossen sind, das der dritten Kammer zugeordnete Absperrventil (35) offen ist und die zweite Kammer (16) durch die Druckmittel unter Druck gesetzt ist, derart, daß das zweite Drosselventil (28a) mit dem zweiten Detektor (40) überprüfbar ist.

6. Hydraulische Bremse nach Anspruch 3, worin das der ersten Kammer zugeordnete Absperrventil (33) und das der zweiten Kammer zugeordnete Absperrventil (34) und das der dritten Kammer zugeordnete Absperrventil (35) geschlossen sind und die zweite Kammer (16) durch die Druckmittel unter Druck gesetzt ist, derart, daß die dem Gehäuse zugeordneten Abdichtmittel (17) mit dem dritten Detektor (41) überprüfbar sind.

7. Hydraulische Bremse nach Anspruch 3, worin die Kolbenabdichtmittel eine erste Dichtung (14) zur Abdichtung des Kolbens (4) gegenüber der ersten Kammer (15) und eine zweite Dichtung (14a) zur Abdichtung des Kolbens gegenüber der zweiten Kammer (16) beinhalten.

8. Hydraulische Bremse nach Anspruch 7, worin das der ersten Kammer zugeordnete Absperrventil (33) das der zweiten Kammer zugeordnete Absperrventil (34) und das der dritten Kammer zugeordnete Absperrventil (35) geschlossen sind und die erste Kammer (15) durch die Druckmittel unter Druck gesetzt ist, derart, daß die erste Kolbendichtung (14) mit dem zweiten Detektor (40) überprüfbar ist.

9. Hydraulische Bremse nach Anspruch 7, worin das der ersten Kammer zugeordnete Absperrventil (33) und das der zweiten Kammer zugeordnete Absperrventil (34) geschlossen sind, das der dritten Kammer zugeordnete Absperrventil (35) geöffnet ist und die zweite Kammer (16) durch die Druckmittel unter Druck gesetzt ist, derart, daß die zweite Kolbendichtung (14a) mit dem ersten Detektor (39) überprüfbar ist.